# EUROPEAN PATENT APPLICATION

(11) **EP 4 796 205 A2**
(43) Date of publication of application: **26.08.2026**
(21) Application number: 25222372.2
(22) Date of filing: 10.12.2025
(51) Int. Cl.: B01D 53/14

(54) **NON-AQUEOUS SOLVENT FORMULATIONS FOR ACID GAS CAPTURE AND PROCESS FOR ACID GAS REMOVAL WITH SAID SOLVENT FORMULATIONS**

(30) Priority: 13.12.2024 US 202463733799 P
(71) Applicant: Research Triangle Institute, Research Triangle Park, North Carolina 27709 (US)
(72) Inventor: Lail, Marty, Raleigh, 27613 (US); Cody, Lucas, Cary, 27511 (US); Bhattacharya, Moumita, Durham, 27703 (US); Mogollon, Daniel, Chapel Hill, 27516 (US); Tanthana, Jak, Durham, 27713 (US)
(74) Representative: Cameron Intellectual Property Ltd

(57) **Abstract**

A solvent system formulation comprising a diluent component and a nitrogenous base component for the removal of acid gases from mixed gas streams is provided. Also provided is a process for removing acid gases from mixed gas streams using the disclosed solvent system formulation. The solvent system formulation may be utilized within a gas processing system.

## Description

### FIELD OF THE INVENTION

The present disclosure relates to solvent system formulations for the removal of specific components of gas streams, as well as devices and methods using such systems. More specifically, the disclosed solvent system formulations can provide for removal of acid gases such as CO₂, SO₂, COS, CS₂ and NOₓ. Continuous operation of devices and methods using such formulations is also described.

### BACKGROUND OF THE INVENTION

Various strategies are being pursued to minimize the production and/or release of undesirable emissions from combustion processes. One such strategy is the development of technologies for the specific removal of acid gases from gas mixtures, such as the exhausts of carbon combustion processes. The separation of acid gases, such as CO₂, from gas mixtures has been carried out industrially for over a hundred years, although no known process has been used on a large scale such as that required by large, industrial power plants. Of the numerous processes used for CO₂ separation, current technology mainly focuses on the use of various solvents, such as alkali carbonates in the BENFIELD^{™} Process (UOP, LLC), alcoholamines in the ECONAMINE FG PLUS^{™} process (Fluor Corporation), and alcohols, diols, and ethers in the RECTISOL^{®} process (Lurgi, GMBH) and the SELEXOL^{™} solvent (The Dow Chemical Company). In a typical solvent-based process, a gas stream to be treated is passed through a liquid solvent that interacts with acidic compounds in the gas stream (e.g., CO₂ and SO₂) and separates them from non-acidic components. The liquid becomes rich in the acid-gas components, which are then removed under a different set of operating conditions so that the solvent can be recycled for additional acid-gas removal.

Ongoing research in the area of acid gas capture has yielded additional types of solvents which find use in certain applications. For example, aqueous systems, hybrid solvents (comprising alcoholamines and/or amines in combination with alcohols, diols, and/or cyclic carbonates) and ionic liquids (including room-temperature switchable ionic liquids) have been studied and reported as suitable methods for acid gas capture. Most solvents, however, suffer from one or more drawbacks, including, e.g., high energy of regeneration (e.g., due to high vapor pressure), undesirable side reactions during treatment of some gas streams, precipitate formation during use, and the like. It would be beneficial to provide further formulations capable of effectively removing acid gases from gas streams (particularly water-containing gas streams) with suitable properties for a range of applications.

### SUMMARY OF THE INVENTION

The disclosure provides certain solvent system formulations for the capture/removal of acidic gases, such as CO₂, from gas streams. Advantageously, such solvent system formulations can exhibit certain performance advantages as compared with other types of solvents. For example, they can substantially low vapor pressure, high reaction/capture efficiency, little to no precipitate formation and/or simple implantation in gas separation processes, e.g., enabling the use of regular water wash devices to prevent fugitive amine emissions in treated gas. In some embodiments, the solvent system formulations provided herein can be regenerated at lower temperature and operated at a lower energy load than solvents currently used.

The disclosure provides, without limitation, the following embodiments:
Embodiment 1: A solvent system comprising a solution formed of: a nitrogenous base component, comprising a nitrogenous base having a hydrogen atom leaving group and a vapor pressure of less than 0.1 kPa at 25°C and 101 kPa; and a diluent component, wherein the nitrogenous base has a structure such that it reacts with an acidic gas so as to form a carbamate salt or a heteroatom analogue of a carbamate salt without any substantial formation of a carbonate ester or a heteroatom analogue of a carbonate ester, and wherein no substantial amount of precipitate is formed upon combination of CO₂ with the solvent system.
Embodiment 2: The solvent system of Embodiment 1, wherein the solvent system has a solubility with water of less than about 10 g of solvent per 100 mL of water.
Embodiment 3: The solvent system of Embodiment 1 or 2, wherein the nitrogenous base is selected from the group consisting of N-methyl-1-(naphthalen-1-yl)methanamine, N-methyl-1-(naphthalen-1-yl)methanamine, 2-(naphthalen-1-yl)ethan-1-amine, N1-(naphthalen-1-yl)ethane-1,2-diamine, 1-(naphthalen-1-yl)methanamine, (1,2,3,4-tetrahydroisoquinolin-3-yl)methanol, N-benzyl-1-phenylmethanamine, 1,1-diphenylmethanamine, 1,2,3,4 tetrahydroquinoxaline, 4-[(methylamino)methyl]phenol, 2-amino-2-phenylethan-1-ol, 2-amino-2-phenylethan-1-ol, N-ethyl-1-phenylpropan-2-amine, 2-(piperidin-1-yl)ethan-1-amine, and combinations thereof. Embodiment 4: The solvent system of any of Embodiments 1-3, wherein the diluent component comprises a polyalkylene ether.
Embodiment 5: The solvent system of Embodiment 4, wherein the polyalkylene ether is a monoether, diether, or polyalkylene glycol.
Embodiment 6: The solvent system of any of Embodiments 1-5, wherein the diluent component is selected from the group consisting of 1-[2-(2-butoxyethoxy)ethoxy]butane, 5,8,11,14-tetraoxaoctadecane, tetraethyleneglycol-di-butyl ether, 1-[2-(2-methoxyethoxy)ethoxy]butane, 2,5,8,11-tetraoxapentadecane, 2,5,8,11-tetraoxapentadecane, 2-(2-butoxyethoxy)ethan-1-ol, 2-[2-(2-butoxyethoxy)ethoxy]ethan-1-ol, 3,6,9,12-tetraoxahexadecan-1-ol, 1-methoxy-2-(2-methoxyethoxy)ethane, 2,5,8,11-tetraoxadodecane, 2,5,8,11,14-pentaoxapentadecane, 2-(2-methoxyethoxy)ethan-1-ol, 2-[2-(2-methoxyethoxy)ethoxy]ethan-1-ol, 2,5,8,11-tetraoxatridecan-13-ol, 2,2'-oxydi(ethan-1-ol), 2,2'-[ethane-1,2-diylbis(oxy)]di(ethan-1-ol), 2,2'-[oxybis(ethane-2,1-diyloxy)]di(ethan-1-ol), 1-{[1-(2-butoxypropoxy)propan-2-yl]oxy}butane, 1-{ [1-(2-methoxypropoxy)propan-2-yl]oxy}butane, 1-(2-butoxypropoxy)propan-2-ol, and combinations thereof.
Embodiment 7: The solvent system of any of Embodiments 1-6, comprising a single diluent and a single nitrogenous base.
Embodiment 8: The solvent system of any of Embodiments 1-6, comprising a single diluent and two different nitrogenous bases.
Embodiment 9: The solvent system of any of Embodiments 1-8, consisting essentially of one or more diluents and one or more nitrogenous bases, alone or in combination with one or more gas stream components (e.g., acid gases) and/or reaction products.
Embodiment 10: The solvent system of Embodiment 9, wherein the reaction products comprise a carbamate salts or a heteroatom analogue of a carbamate salt.
Embodiment 11: The solvent system of any of Embodiments 1-10, comprising at least about 50% by weight of the nitrogenous base component.
Embodiment 12: The solvent system of Embodiment 11, comprising at least about 70% by weight of the nitrogenous base component.
Embodiment 13: A solvent system comprising a solution formed of: a nitrogenous base component A selected from 1-(naphthalen-1-yl)ethan-1-amine (A1), N-methyl-1-(naphthalen-1-yl)methanamine (A2), 1,2,3,4-tetrahydroisoquinoline (A4), and 2-(benzylamino)ethan-1-ol (A9); and a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), and 5,8,11,14-tetraoxaoctadecane (D20).
Embodiment 14: The solvent system of Embodiment 13, consisting essentially of A and D, alone or in combination with one or more gas stream components (e.g., acid gases) and/or reaction products.
Embodiment 15: A solvent system comprising a solution formed of: two different nitrogenous base components A_{A} and A_{B}, wherein A_{A} is selected from *N*-methyl-1-(naphthalen-1-yl)methanamine (A2) and 2-(benzylamino)ethan-1-ol (A9) and wherein A_{B} is selected from 1-(naphthalen-1-yl)ethan-1-amine (A1), *N*-methyl-1-(naphthalen-1-yl)methanamine (A2), 1,2,3,4-tetrahydroisoquinoline (A4), A5, and 2-(benzylamino)ethan-1-ol (A9); and a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), 1-[(1-propoxypropan-2-yl)oxy]propan-2-ol (D12), 1-[(1-butoxypropan-2-yl)oxy]propan-2-ol (D13), 2-butoxyethyl acetate (D15), 2-[(2-ethylhexyl)oxy]ethan-1-ol (D17), polyethylene glycol phenyl ether (D18), and 2-[2-(hexyloxy)ethoxy]ethan-1-ol (D19), wherein a combination of A2, A5, and D3 contains less than 78% by weight of A2 and/or greater than 12% A5 by weight; wherein a combination of A2, A5, and D5 contains less than 80% A2 by weight and/or greater than 8% A5 by weight; wherein a combination of A2, A5, and D6 contains less than 78% A2 by weight and/or greater than 10% A5 by weight; wherein a combination of A2, A5, and D9 contains a higher content of A2 than A5 by weight and contains less than 75% A2 by weight and/or greater than 10% A5 by weight; wherein a combination of A2, A5, and D10 contains less than 70% A2 by weight and/or greater than 15% A5 by weight; wherein a combination of A2, A5, and D11 contains less than 80% A2 by weight and/or greater than 10% A5 by weight; and wherein a combination of A2, A5, and D13 contains less than 70% A2 by weight and/or more than 15% A5 by weight.
Embodiment 16: A process for the removal of acid gas from a gas stream, comprising contacting an acid gas-containing gas stream with the solvent system of any of Embodiments 1-15.
Embodiment 17: The process of Embodiment 16, further comprising outputting an acid gas-rich solvent and an acid gas-lean gas stream.
Embodiment 18: The process of Embodiment 16 or 17, further comprising regenerating the acid gas-rich solvent by applying heat to form a regenerated solvent comprising a lower content of acid gas than present in the acid gas-rich solvent.
Embodiment 19: The process of any of Embodiments 16-18, wherein the heat applied by the regeneration component is derived from a source selected from the group consisting of low-pressure steam, hot flue gas, or a combination thereof.

These and other features, aspects, and advantages of the disclosure will be apparent from a reading of the following detailed description, together with the accompanying drawings, which are briefly described below. The invention includes any combination of two, three, four, or more of the above-noted embodiments, as well as combinations of any two, three, four, or more features or elements set forth in this disclosure, regardless of whether such features or elements are expressly combined in a specific embodiment description herein. This disclosure is intended to be read holistically such that any separate features or elements of the disclosed invention, in any of its various aspects and embodiments, should be viewed as intended to be combinable unless the context clearly dictates otherwise.

### BRIEF DESCRIPTION OF THE DRAWINGS

In order to provide an understanding of the embodiments of the invention, reference is made to the appended drawings, which are not necessarily drawn to scale, and in which reference numerals refer to components of exemplary embodiments of the invention. The drawings are exemplary only, and should not be construed as limiting the invention.
FIG. 1 provides molecular structures and designations of certain, non-limiting nitrogenous bases that are components of certain disclosed solvent system formulations provided herein;
FIGs. 2A, 2B, and 2C provide molecular structures and designations of certain, non-limiting diluents (polyalkylene ethers, glycolethers, glycols, and acetates) that are components of certain disclosed solvent system formulations provided herein;
FIG. 3 is a schematic diagram of a CO₂ saturation station used to test certain, non-limiting solvent system formulations of the present disclosure;
FIG. 4 is a photograph of a modified CO₂ saturation station used to test certain, non-limiting system formulations of the present disclosure, kept at a temperature of 40°C;
FIG. 5 is a process flow diagram of an exemplary lab-scale gas absorption system (LsGAS), as used for certain testing protocols as described herein;
FIG. 6 is a plot of CO₂ removal efficiency of one non-limiting solvent system formulation as disclosed herein (A2-D9) at LsGAS capturing 4 vol. % CO₂ under simulated NGCC conditions; and
FIG. 7 is a process flow diagram of an emission testing system employed to evaluate various non-limiting solvent system formulations provided herein.

### DETAILED DESCRIPTION OF THE INVENTION

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements. As used in this specification and the claims, the singular forms "a," "an," and "the" include plural referents unless the context clearly dictates otherwise.

The use of non-aqueous solvent systems for the treatment of acid gas-containing gas streams is generally known. *See, e.g.,* WO2012/031274, WO2012/031281, and WO2013/130997, all to Research Triangle Institute, which are incorporated herein by reference in their entireties. While many non-aqueous solvent system components have been generally described in various references, it is noted that not all classes of components are suitable and/or effective for acid gas capture. For example, certain components or combinations of components disadvantageously react with themselves or one another and/or form a solid material. The formation of reaction products and/or the production of solid material can render such components or combinations of components unsuitable for use in treatment of gas streams comprising acid gases to remove acid gases therefrom and/or unsuitable for use in systems for this purpose.

The present disclosure focuses on particular solvent systems that uniquely exhibit low vapor pressure and/or that do not result in the formation of significant amounts of precipitate during use, as will be described further herein. The inventors have identified certain formulations comprising a combination of a nitrogenous base component (or nitrogenous base components) and a diluent (or diluents) that have been evaluated and provide particularly advantageous results in the context of gas treatment systems. For example, in some embodiments, the identified formulations do not produce any significant amount of particulate/solid material when the components (nitrogenous base component(s) and diluent(s)) are combined, e.g., at room temperature. Such formulations are particularly suitable for use within a gas treatment system and/or gas treatment method, as they exhibit low vapor pressures as will be described in further detail herein.

The solvent system formulations provided herein generally comprise a nitrogenous base component and a diluent. Certain solvent systems comprise a single nitrogenous base component and a single diluent; certain solvent systems comprise a single nitrogenous base component and two or more diluents; and certain solvent systems comprise two or more nitrogenous base components and a single diluent. In some embodiments, such solvent systems can be said to "consist essentially" of the noted components or "consist" of the noted components. In some embodiments, such solvent systems can be said to (e.g., during use) comprise additional components present within a gas stream being treated and/or reaction products of such components (resulting from reaction with one another or with one or more of the solvent system components).

The nitrogenous base component generally comprises at least one compound that is a nitrogenous base having a hydrogen atom leaving group (preferably having a nitrogen with a hydrogen atom leaving group) with a low vapor pressure. This nitrogenous base advantageously has a structure such that it reacts with an acidic gas so as to form a carbamate salt or a heteroatom analogue of a carbamate salt without any substantial formation of a carbonate ester or a heteroatom analogue of a carbonate ester. It is to be understood that the structure of the reference "heteroatom analogue of a carbamate salt" and "heteroatom analogue of a carbonate ester" can readily be envisioned by one of skill in the art as being dependent on, for example, the composition of the acidic gas or gases with which the compound could react (or has reacted).

In some embodiments, the nitrogenous base has a pKa of about 8 to about 12. In some embodiments, the nitrogenous base has a pKa of about 8 to about 15, about 8 to about 14, about 8 to about 13, about 8 to about 12, about 8 to about 11, or about 8 to about 10. In certain embodiments, the nitrogenous base component has a pKa less than about 11.

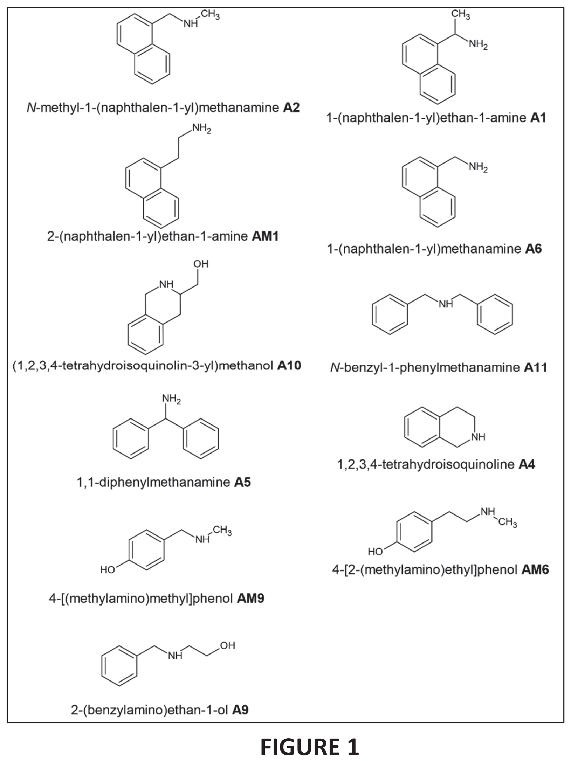

In some embodiments, the nitrogenous base is selected from the group consisting of primary amines, secondary amines, diamines, triamines, tetraamines, pentamines, cyclic amines, cyclic diamines, amine oligomers, polyamines, alcoholamines, and mixtures thereof. Certain specific nitrogenous bases for use in the solvent system formulations described herein include, but are not limited to, *N*-methyl-1-(naphthalen-1-yl)methanamine, *N*-methyl-1-(naphthalen-1-yl)methanamine, 2-(naphthalen-1-yl)ethan-1-amine, *N*₁-(naphthalen-1-yl)ethane-1,2-diamine, 1-(naphthalen-1-yl)methanamine, (1,2,3,4-tetrahydroisoquinolin-3-yl)methanol, *N*-benzyl-1-phenylmethanamine, 1,1-diphenylmethanamine, 1,2,3,4 tetrahydroquinoxaline, 4-[(methylamino)methyl]phenol, 2-amino-2-phenylethan-1-ol, 2-amino-2-phenylethan-1-ol, *N*-ethyl-1-phenylpropan-2-amine, 2-(piperidin1-yl)ethan-1-amine, and mixtures thereof. The molecular structures of certain such amines are shown in FIG. 1.

A primary amine is understood to be a compound of the formula NH₂R, where R can be a carbon-containing group, including but not limited to C₁-C₂₀ alkyl. A secondary amine is understood to be a compound of the formula NHR₁R₂, wherein R₁ and R₂ are independently carbon-containing groups, including but not limited to C₁-C₂₀ alkyl, wherein R, R₁, and R₂ are independently carbon-containing groups, including but not limited to C₁-C₂₀ alkyl. One or more of the hydrogens on R, R₁, and R₂ may optionally be replaced with one or more substituents. For example, one or more of the hydrogens on R, R₁, or R₂ may be replaced with optionally substituted C₁-C₆ alkyl, optionally substituted C₁-C₆ alkoxy, optionally substituted C₂-C₁₀ alkenyl; optionally substituted C₂-C₁₀ alkynyl; optionally substituted alkaryl; optionally substituted arylalkyl; optionally substituted aryloxy; optionally substituted heteroaryl; optionally substituted heterocycle; halo (*e.g.,* Cl, F, Br, and I); hydroxyl; halogenated alkyl (*e.g.,* CF₃, 2-Br-ethyl, CH₂F, CH₂CF₃, and CF₂CF₃); optionally substituted amino; optionally substituted alkylamino; optionally substituted arylamino; optionally substituted acyl; CN; NO₂; N₃; CH₂OH; CONH₂; C₁-C₃ alkylthio; sulfate; sulfonic acid; sulfonate esters (e.g., methanesulfonyl); phosphonic acid; phosphate; phosphonate; mono-, di-, or triphosphate esters; trityl or monomethoxytrityl; CF₃S; CF₃SO₂; or silyl (e.g., trimethylsilyl, dimethyl-t-butylsilyl, and diphenylmethylsilyl). Cyclic amines are amines wherein the nitrogen atom forms part of the ring structure, and may include, but are not limited to, aziridines, azetidines, pyrrolidines, piperidines, piperazines, pyridines, pyrimidines, amidines, pyrazoles, and imidazoles. Cyclic amines may comprise one or more rings and may optionally be substituted with one or more substituents as listed above. In some embodiments, the nitrogenous base has a guanidine structure, which is optionally substituted with one or more substituents as noted above. In some embodiments, the nitrogenous base has an amidine structure, which is optionally substituted with one or more substituents as noted above. In some embodiments, the nitrogenous base may be a diamine. In some embodiments, the nitrogenous base may be a primary or secondary alcoholamine. Alcoholamines are also known as amino alcohols and contain both an alcohol and amine group. The amine group of the alcoholamine may be any type of amine as disclosed herein. In some embodiments, the alcoholamine is a primary, secondary, or tertiary alcohol amine.

The nitrogenous base component is selected, according to the present disclosure, so as to have a relatively low vapor pressure. For example, in some embodiments, the nitrogenous base component has a vapor pressure of less than 0.1 kPa at 25°C and 101 kPa. Using solvent system components with low vapor pressure can allow for gas cleaning and gas treating processes which do not cause significant secondary environmental pollution due to fugitive emissions and do not require elaborate engineering approaches to prevent unwanted losses to the gas phase. As such, the disclosed nitrogenous base component (and corresponding solvent system formulation) can, in some embodiments, be used to remove acid gas components from a gas stream without being lost substantially to the vapor phase during operation and/or can remain effective at removing acid gases from gas streams during use. While the nitrogenous base component is described herein as having a relatively low vapor pressure, in some embodiments, the diluent component and/or the fully formulated solvent system formulation also exhibit relatively low vapor pressures (e.g., within the range referenced above).

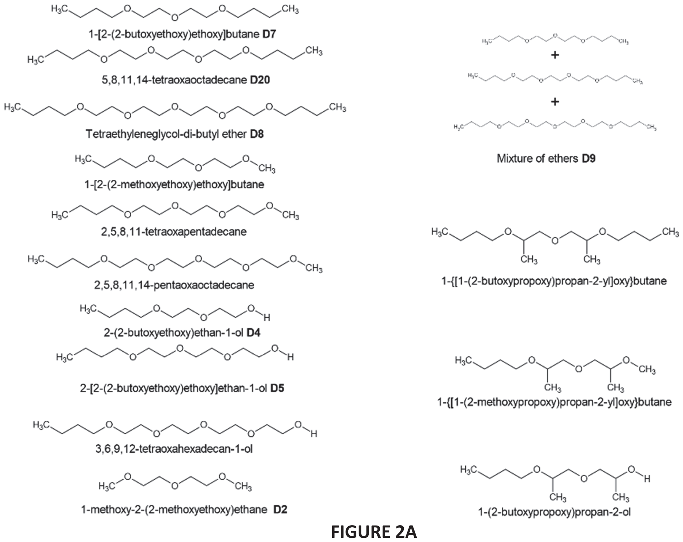

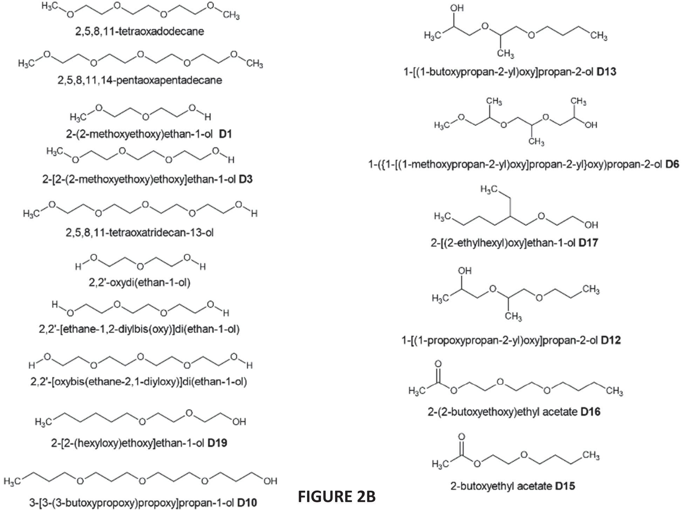

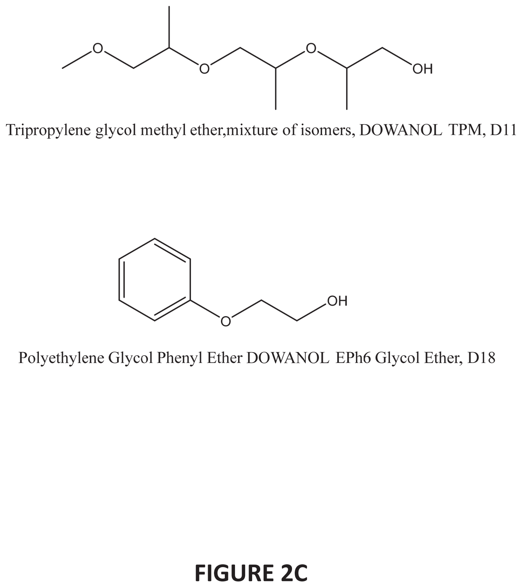

The diluent component of the disclosed solvent system formulations is generally non-aqueous and, in some embodiments, is hydrophobic. In some embodiments, the diluent is selected from the group consisting of polyalkylene ethers (including monoethers and diethers), and in some cases polyalkyleneglycols. In some embodiments, the diluent is specifically selected from the group consisting of: 1-[2-(2-butoxyethoxy)ethoxy]butane, 5,8,11,14-tetraoxaoctadecane, tetraethyleneglycol-di-butyl ether, 1-[2-(2-methoxyethoxy)ethoxy]butane, 2,5,8,11-tetraoxapentadecane, 2,5,8,11-tetraoxapentadecane, 2-(2-butoxyethoxy)ethan-1-ol, 2-[2-(2-butoxyethoxy)ethoxy]ethan-1-ol, 3,6,9,12-tetraoxahexadecan-1-ol, 1-methoxy-2-(2-methoxyethoxy)ethane, 2,5,8,11-tetraoxadodecane, 2,5,8,11,14-pentaoxapentadecane, 2-(2-methoxyethoxy)ethan-1-ol, 2-[2-(2-methoxyethoxy)ethoxy]ethan-1-ol, 2,5,8,11-tetraoxatridecan-13-ol, 2,2'-oxydi(ethan-1-ol), 2,2'-[ethane-1,2-diylbis(oxy)]di(ethan-1-ol), 2,2'-[oxybis(ethane-2,1-diyloxy)]di(ethan-1-ol), and mixtures thereof. The list of diluents is not limited to linear polyalkylene ethers or glycols, but can include branched structures such as 1-{[1-(2-butoxypropoxy)propan-2-yl]oxy}butane, 1-{[1-(2-methoxypropoxy)propan-2-yl]oxy}butane, 1-(2-butoxypropoxy)propan-2-ol. Exemplary ethers, glycol ethers, and glycols are shown in FIG. 2.

In certain embodiments, the diluent is selected such that it has low miscibility with water. For example, in some embodiments, the diluent has a solubility of less than or equal to about 10g/100mL in water at 25 °C (i.e., 10 g of solvent per 100 mL of water). In other embodiments, the diluent has a solubility in water of less than or equal to about 0.01g/100 mL, less than or equal to about 0.1g/100mL, less than or equal to about 0.5 g/100mL, less than or equal to about 1g/100mL, less than or equal to about 1.5 g/100mL, less than or equal to about 2 g/100mL, less than or equal to about 2.5 g/100mL, less than or equal to about 3 g/100mL, less than or equal to about 4 g/100mL, less than or equal to about 5 g/100mL, less than or equal to about 6 g/100mL, less than or equal to about 7 g/100mL, less than or equal to about 8 g/100mL, or less than or equal to about 9 g/100mL in water at 25 °C. In some embodiments, the diluent is completely immiscible with water. Using diluents with low water solubility may result in solvent systems that display one or more of the following attributes: they may require less energy for regeneration; may have high CO₂ loading capacities; may be able to tolerate water in the gas stream; and/or may be able to be separated from water without a large energy penalty.

As referenced herein above, the disclosed solvent system formulations comprise one or more nitrogenous bases as provided herein and one or more diluents as provided herein. Typically, the one or more nitrogenous bases are the only component of the disclosed solvent systems that react with an acidic gas in a gas stream to be treated, and the diluent is, as the name indicates, present to dilute/solvate the nitrogenous base component and/or components of the gas stream and/or reaction products. In some embodiments, the nitrogenous base component of the solvent system formulation has higher miscibility with the diluent than with water. In some embodiments, the nitrogenous base component has high solubility in the diluent component. As referenced herein above, the disclosure is intended to encompass such combinations wherein little to no precipitate is formed by the combination of the solvent system formulation components, *e.g*., at 22°C.

In some embodiments, the nitrogenous base component and the diluent component are present in roughly equal proportions by molarity (i.e. are present in roughly equimolar amounts). In certain embodiments, the diluent component is present in excess. In certain embodiments, the nitrogenous base component is present in excess. For example, the molar ratio of nitrogenous base component to diluent component can be about 1:1 to about 100:1, about 1:1 to about 50:1, about 1:1 to about 25:1, about 1:1 to about 20:1, or about 1:1 to about 18:1, for example, about 1.1:1 to about 20:1, about 1.1:1 to about 18:1, about 1.1:1 to about 15:1, about 1.1:1 to about 10:1, about 1.1:1 to about 5:1, about 1.1:1 to about 3:1, about 2:1 to about 20:1, about 2:1 to about 18:1, about 2:1 to about 15:1, 2:1 to about 10:1, about 2:1 to about 5:1, about 3:1 to about 18:1, about 3:1 to about 20:1, about 3:1 to about 15:1, about 3:1 to about 10:1, about 4:1 to about 20:1, about 4:1 to about 18:1, about 4:1 to about 15:1, about 4:1 to about 10:1, about 5:1 to about 20:1, about 5:1 to about 18:1, about 5:1 to about 15:1, or about 5:1 to about 10:1. In some embodiments, the nitrogenous base component can exhibit a reasonably high concentration in the solvent system formulation. In some embodiments, the disclosed solvent system formulations comprise at least about 40% by weight of the nitrogenous base component, at least about 50% by weight of the nitrogenous base component, at least about 60% by weight of the nitrogenous base component, at least about 70% by weight of the nitrogenous base component, at least about 80% by weight of the nitrogenous base component, or at least about 85% by weight of the nitrogenous base component (e.g., about 40% to about 95% by weight, about 40% to about 92% by weight, about 50% to about 95% by weight, about 50% to about 92% by weight, about 70% to about 95% by weight, about 70% to about 92% by weight, about 80% to about 95% by weight, about 80% to about 92% by weight, about 85% to about 95% by weight, or about 85% to about 92% by weight of the nitrogenous base component). Advantageously, the inventors have recognized combinations of components that provide solvent system formulations with high nitrogenous base loading, allowing for high acid gas capture efficiency, while preventing substantial precipitation within the solvent system formulation.

The solvent system formulations described herein are in liquid form. Such solvent system formulations (and, in some embodiments, the individual components separately) generally have low solubility with water. For example, in certain embodiments, one or more of the individual solvent system components (i.e., the nitrogenous base component and/or the diluent component) have a solubility with water of less than about 10 g of solvent per 100 mL of water over a temperature range of 25°C-120°C and in some embodiments, the solvent system formulation also has a solubility with water of less than about 10 g of solvent per 100 mL of water over a temperature range of 25°C-120°C. The non-aqueous nature of the solvent system formulation components and the solvent system formulation itself endows them with performance advantages over other types of solvents.

In some embodiments, the solvent system formulations provided herein are tolerant to the presence of water. In certain embodiments, the solvent system formulation tolerates water up to or equal to about 8% water by volume. In some embodiments, tolerance to the presence of water means that there is little to no degradation of the solvent performance up to the indicated volume of water. In some embodiments, the solvent system formulation maintains at or near its initial capacity for CO₂ loading up to the indicated volume of water.

The disclosed solvent system formulations may be used for the separation of acidic gases from gas mixtures. As such, the present disclosure further provides a process for the removal of acid gas from a gas stream, comprising contacting an acid gas-containing gas stream with the disclosed solvent system formulation. The term "acid gas" is intended to refer to any gas component that can result in formation of an acid when mixed with water. Non-limiting examples of acid gases encompassed by the present invention include CO₂, SO₂, COS, CS₂ and NOₓ. For simplicity, the disclosure refers in various places specifically to CO₂; it is understood, however, that the present invention encompasses methods and systems for removal of any acid gas component from a gas stream. The acid gas-containing gas stream may be a mixed gas stream, having one or more other components in addition to the one or more acid gases.

When a solvent system formulation as provided herein is purged with a gas mixture containing CO₂, the nitrogenous base component undergoes a chemical reaction with CO₂, binding the CO₂ in the solution. This reaction results in the formation of a carbamate salt or, where the acid gas is an acid gas other than CO₂, the formation of a heteroatom analogue of a carbamate salt. The reaction of the nitrogenous base component and the acid gas advantageously proceeds without any substantial formation of a carbonate ester, preferably with no formation of a carbonate ester. "Substantial" is defined herein as meaning that the product of the reaction is at least about 80% carbamate salt, at least about 98% carbamate salt, at least about 99% carbamate salt, at least about 99.5% carbamate salt, at least about 99.9% carbamate salt and most desirably, 100% carbamate salt (or heteroatom analogue thereof). Thus, the product of the reaction can be characterized as having less than about 20% carbonate ester, less than about 2% carbonate ester, less than about 1% carbonate ester, less than about 0.5% carbonate ester, less than about 0.1% carbonate ester, and most desirably, 0% carbonate ester (or heteroatom analogue thereof).

The reaction products can then be separated from the non-acid gas components of the gas stream being treated. The use of solvent system formulations such as disclosed herein is particularly advantageous, e.g., when the acid gas concentration is low and/or when a high purity product is desired. In such embodiments, as the gas stream is passed through the solvent system formulation, the liquid becomes rich in acid gas reaction products, and these products can be removed (as described herein below) so that the solvent can optionally be recycled for additional acid gas removal.

In some embodiments, the solvent system formulations of the present disclosure can have high CO₂ loadings. For example, the solvent system formulations may be useful for capturing or removing greater than about 0.05 moles CO₂ per mole of nitrogenous base, greater than about 0.1 moles CO₂ per mole of nitrogenous base, greater than about 0.2 moles CO₂ per mole of nitrogenous base, greater than about 0.3 moles CO₂ per mole of nitrogenous base, greater than about 0.4 moles CO₂ per mole of nitrogenous base, or greater than about 0.5 moles CO₂ per mole of nitrogenous base,

The gas stream treated is not particularly limited. In some embodiments, the disclosed solvent system formulation is used to separate acid gas components from exhaust streams, remove acid gas components from feed streams and fuel streams prior to combustion or transportation and/or to remove acid gases from dilute mixtures. In some embodiments, the gas stream treated according to the present disclosure can be fossil fuel combustion flue gas, a natural gas mixture, or a mixture or respiration gases from closed environments containing CO₂. The solvent system formulations provided herein can be applicable over a wide range of temperatures and pressures for separating/removing acid gases. Acid gas mixtures may exist at high partial pressures and low partial pressures. These solvent system formulations can, in some embodiments, be used in the context of high partial pressures of acid gases, such as mixtures of produced natural gas containing H₂S and CO₂ impurities which must be removed before the natural gas can be used.

In some embodiments, the disclosed solvent system formulations can allow for the reduction of the release of undesirable acid gases at low partial pressure from industrial processes. For example, the disclosed solvent system formulations can be used to separate and/or remove acid gas from exhaust of fossil fuel combustion processes, industrial kiln oven gases, from furnaces used to reduce metal ores, and the like. In some embodiments, the disclosed solvent system formulations, processes, and systems are used to treat gas streams from a carbon capture plant. While the separation of acidic greenhouse gases, such as CO₂, from gas mixtures has been conducted in several key industries for over a hundred years, it has only been done so on a small scale. No known process has been used on a large scale such as required by industrial power plants, cement plants, steel plants, pulp and paper plants, aluminum plants, glass plants, and petrochemical plants for removing significant portions of their green-house gas emissions, primarily CO₂. In some embodiments, the disclosed solvent system formulations can provide an advantageous alternative to known processes used for low pressure CO₂ separation (e.g., water-based solvents, such as alkali carbonates in the BENFIELD^{™} Process (UOP, LLC), aqueous alcoholamines in the ECONAMINE FG PLUS^{™} process (Fluor Corporation), Mitsubishi's KS process, BASF's Oase process, and Shell's CANSOLVE process). For example,

Various measures are being taken to reduce the release of undesirable acid gases at low partial pressure from industrial processes. One such strategy is the development of technologies for removing greenhouse and acid gases from gas mixtures, such as the exhausts of fossil-fuel combustion processes. Another is the separation and removal of CO₂ from industrial kiln oven gas where acid gases are present. Another is the removal of acid gases such as CO₂ from furnaces used to reduce metal ores. The separation of acidic greenhouse gases, such as CO₂, from gas mixtures has been conducted in several key industries for over a hundred years, but only at a small scale. No known process has been used on a large scale such as what is required by industrial power plants, cement plants, steel plants, pulp and paper plants, aluminum plants, glass plants, and petrochemical plants for removing significant portions of their green-house gas emissions, primarily CO₂. Of the numerous processes used for low pressure CO₂ separation, current technology focuses on the use of water-based solvents, such as alkali carbonates in the BENFIELDTM Process (UOP, LLC), aqueous alcoholamines in the ECONAMINE FG PLUSTM process (Fluor Corporation), Mitsubishi KS process, BASF Oase process, and Shell CANSOLVE process. The presently disclosed solvent system formulations may provide a relevant alternative, providing suitable capture of acid gases and providing various additional benefits as outlined herein.

In some embodiments, the disclosed solvent system formulations are used in cyclic processes, wherein acid gas absorption is followed by desorption in a different portion of the process. The solvent system formulations can, in some embodiments, utilize multiple absorption/desorption means, including gas absorption/desorption and/or phase-enhanced absorption/desorption. As such, in certain embodiments, the disclosed solvent system formulation is regenerable in that the acidic gases can be released from the solvent, and the solvent can be reused to separate additional acidic gases from further gas mixtures, *i.e.,* the disclosed solvent system formulations can, in some embodiments, be described as being reversible.

Methods for desorption/removal of the acid gas components from the rich solvent system formulation can, in some embodiments, involve pressure and/or temperature change. In certain embodiments, the solvent system formulation is regenerable (reaction with the acid gas is reversible) under mild conditions (e.g., at a low temperature). In some embodiments, the release of acid gas and corresponding regeneration of the solvent system formulation is effectuated by heating the solution; when the solution containing bound acid gas is heated, the chemical reaction is reversed and the acid gas can be released, producing a concentrated acid gas stream. In some embodiments, the process involves heating the solvent system formulation at a temperature at or below about 200°C, for example, at or below about 185°C, at or below about 150°C, or at or below about 125°C. In some embodiments, the process involves heating the solvent system formulation at a temperature at or below about 100°C, for example, at a temperature at or below about 95°C, at or below about 90°C, at or below about 85°C, at or below about 80°C, at or below about 75°C, or at or below about 70°C. The heat can, in some embodiments, can be derived from a source selected from the group consisting of low pressure steam, hot flue gas, or a combination thereof.

In some embodiments, the acid gas may be released at ambient temperature. In certain embodiments, the acid gas is captured in a non-aqueous phase under conditions in which water accumulates as a separate, lower density phase. This phase can be sent to the regenerator with the rich, non-aqueous phase to be regenerated at a lower temperature than the corresponding rich aqueous phase alone. This can be followed by phase separation from the lean, regenerated solvent before being sent back to the absorber.

Depending on the temperature of the gas mixture and the partial pressure of the acid-gas in the mixture, certain solvents are preferred for specific applications. When a solvent system formulation operates to interact with an acid-gas by chemical absorption, an exothermic chemical reaction occurs. The reversal of this reaction requires at least the amount of energy to be added back to the rich solvent that was produced by the forward reaction, not to mention the energy needed to bring the rich solvent to the temperature where reversal is appreciable and to maintain conditions to complete the reverse reaction to an appreciable extent. The energy required to obtain purified acid gas from the rich solvent contributes to the cost of the purified product. The cost of the purified acid gas has become a significant hurdle in the industry generally for the application of solvent technologies to fossil-fuel fired power plants for the removal of acid gases, especially CO₂, from flue gas. In particular embodiments, the presently disclosed solvent system formulation is regenerable at temperatures lower than those typically required for solvents used for such purposes. Such non-aqueous solvents can, in some embodiments, remove CO₂ from gas streams (e.g., natural gas streams) and can require less energy for regeneration in both pressure swing and thermal swing regeneration scenarios.

In certain embodiments, at or about 100% of the acid gas is removed from the acid gas-containing gas stream via the disclosed solvent system formulation. However, in other embodiments, less than 100% of the CO₂ is removed from the CO₂-rich solvent system. In preferred embodiments, about 50 to 100% of the captured CO₂ is removed from the CO₂-rich solvent system, preferably about 75% to 100%, about 80% to 100%, about 90% to 100%, about 95% to about 100%, or about 98% to 100%. For example, in some embodiments, at least about 98%, 95%, 90%, 85%, 80%, 75%, 70%, 60%, or 50% of the captured acid gas is removed from the solvent system.

The disclosed process of separation/removal of acid gases from a gas stream via a solvent system formulation as described herein and optional regeneration of the solvent system formulation can be conducted in various systems for acid gas removal as generally known in the art. Such systems for removal of acid gases from gas streams, comprising the disclosed solvent system formulations are provided herein. Acid gas removal systems generally includes an absorber configured with an inlet to receive a gas stream to be treated; the gas stream may come directly from, *e.g.,* a combustion chamber of a boiler system in a power generation plant. The gas stream may or may not be passed through other cleaning systems prior to entering the CO₂ removal system. The absorber may be any chamber wherein a solvent system for the removal of CO₂ is contained, having an inlet and outlet for a gas stream, and wherein the gas stream may be brought into contact with the solvent system formulation. Within the absorber, the CO₂ may be transferred from gaseous phase to liquid phase according to the principles discussed herein. The absorber may be of any type; for example, the absorber may comprise a spray-tower absorber, packed-bed absorber (including countercurrent-flow tower or cross-flow tower), tray-tower absorber (having various tray types, including bubble-cap trays, sieve trays, impingement trays, and/or float valve trays), venture absorber, ejector absorber, and/or rotating packed bed absorber (RPB). The temperature and pressure within the absorber may be controlled. For example, in one embodiment, the temperature of the absorber may be maintained at or near 40-60 °C and the absorber may be maintained at or near atmospheric pressure. Thus, the absorber may be equipped with a heating/cooling system and/or pressure/vacuum system.

Within the absorber, the gas stream is brought into fluid contact with and passed through a solvent system formulation as described herein. The solvent system formulation reacts with the acid gas present in the gas stream, capturing it from the remaining components of the gas, and the resulting acid gas-free gas stream is released from the absorber through an outlet. The solvent system continues to react with entering acid gas as the mixed gas stream is passed through, until it becomes "rich" with CO₂. The absorber is optionally connected to one or more components. For example, the absorber is preferably configured with a means for routing solvent to a unit wherein water may be decanted, centrifuged, or otherwise removed from the system.

At any stage in the process of acid gas capture, the solvent system may be regenerated (as referenced above). The system therefore includes an optional regeneration system to release the captured acid gas via a separate acid gas stream and thus regenerate the solvent system. The regeneration system is configured to receive a feed of "rich" solvent from absorber and to return regenerated solvent to the absorber once acid gas has been separated from the "rich" solvent. The regeneration system may simply comprise a chamber with a heating unit to heat the solvent system at a temperature sufficient to release the gas, along with a release valve to allow the acid gas to be removed from the regeneration system. It may also be a distillation column and have essentially the same design as described above for the absorption column. The regenerator may be optionally connected to one or more components. For example, the regenerator is preferably configured with a means for routing solvent to a unit wherein water may be decanted, centrifuged, or otherwise removed from the system. The released acid gas can be output to storage or for other predetermined uses. The regenerated solvent is again ready to absorb CO₂ from a gas stream, and may be directed back into the absorber.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

### EXPERIMENTALS

The following examples are provided for the purpose of complete disclosure and are not to be viewed as limiting of the invention.

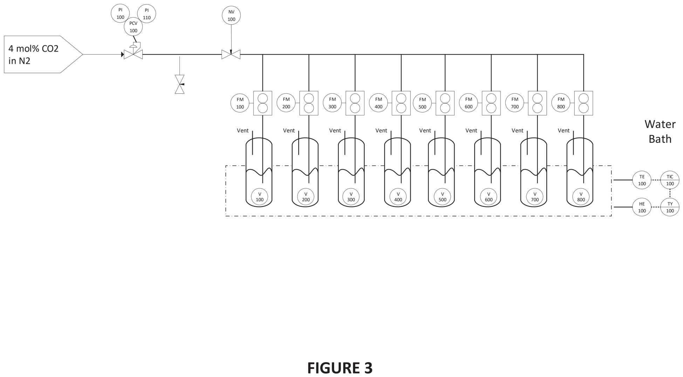

A lab-scale CO₂ saturation system was used to evaluate the CO₂ loading of CO₂ capture formulations. A gas cylinder composed of 4% CO₂ balanced in N₂ was used as the gas feed to resemble NGCC conditions. The schematic of this high throughput apparatus is shown in FIG. 3. A 40°C water bath was added to heat the formulations to resemble absorber column operational conditions. A stir bar was placed in the water bath to eliminate any temperature gradient that could happen along the height of the test tubes. To measure the CO₂ loading, a known volume of gas feed was bubbled through the samples and the mass increase from the sample was assumed to all be chemically absorbed CO₂.

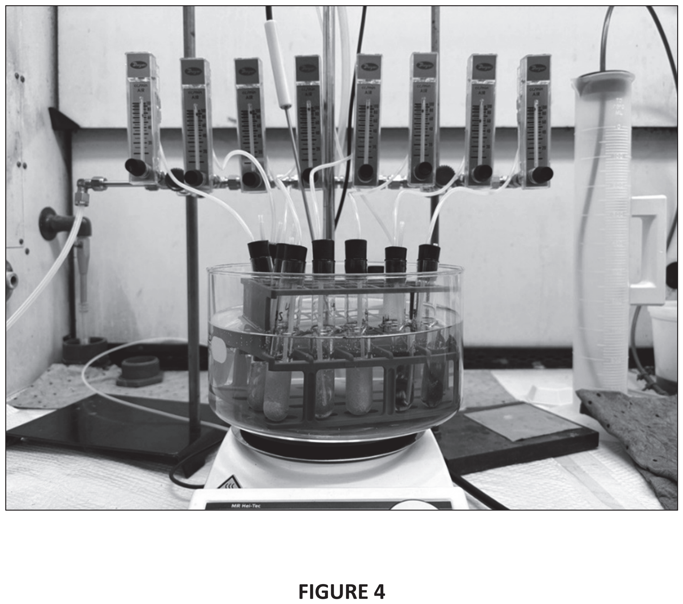

Test tubes are used to prepare the tested formulations (see FIG. 4). A balance was tared with a beaker and a test tube on it. Then, each component of the formulation was added individually without taring the balance and recording the weight after each component. The test tube was shaken to create a homogeneous solution. Once all the components were added, the gas feed tubing with rubber stopper was inserted into the test tube. The weight was recorded as the starting weight of the sample. Then, the test tube was connected to its respective rotameter and N₂ was bubbled at 100 sccm for 2 min to further mix the solution. The N₂ was switched to a premixed 4 vol% CO₂ in N₂ gas from a cylinder via a 3-way to saturate the sample, the flow rate of 4 vol% CO₂/N₂ was set at 100 sccm through a rotameter. CO₂ was bubbled for 30 min then N₂ was passed through the test tube for another 2 mins. This was done to purge the tubing of any solvent in the line and displace any CO₂ that may be physically trapped in the solution. Lastly, the test tube was disconnected from the rotameter and weighed. The corresponding mass increase was assumed to be for chemisorbed CO₂. The composition for each tested formulation and corresponding CO₂ loading in mol-CO₂/mol-amine as well as mol-CO₂/kg-solvent are presented in Table 1. Component designations are correlated with their structures in FIGs. 1 and 2.

**Table 1. Summary of the CO₂ loadings with Xₛₒₗᵥ(mol-amine/mol-solvent)=0.9 of all formulation evaluated under this work.**

| **Entry** | **Component A** | **A wt%** | **Component B** | **B wt%** | **Component C** | **C wt%** | **mol CO₂/ mol amine** | **mol CO₂/ kg solvent** |
|---|---|---|---|---|---|---|---|---|
| 1 | D9 | 15% | A1 | 85% | - | - | 0.09 | 0.47 |
| 2 | D3 | 10% | A2 | 90% | - | - | 0.17 | 0.88 |
| 3 | D5 | 12% | A2 | 88% | - | - | 0.18 | 0.90 |
| 4 | D6 | 13% | A2 | 87% | - | - | 0.16 | 0.79 |
| 5 | D9 | 20% | A2 | 80% | - | - | 0.15 | 0.72 |
| 6 | D10 | 14% | A2 | 86% | - | - | 0.17 | 0.88 |
| 7 | D11 | 9% | A2 | 91% | - | - | 0.12 | 0.65 |
| 8 | D20 | 15% | A2 | 85% | - | - | 0.21 | 1.06 |
| 9 | D3 | 13% | A4 | 87% | - | - | 0.32 | 2.06 |
| 10 | D5 | 13% | A4 | 87% | - | - | 0.30 | 1.95 |
| 11 | D6 | 16% | A4 | 84% | - | - | 0.30 | 1.87 |
| 12 | D9 | 15% | A4 | 85% | - | - | 0.30 | 1.92 |
| 13 | D10 | 13% | A4 | 87% | - | - | 0.33 | 2.13 |
| 14 | D11 | 13% | A4 | 87% | - | - | 0.33 | 2.18 |
| 15 | D3 | 12% | A9 | 88% | - | - | 0.12 | 0.73 |
| 16 | D5 | 14% | A9 | 86% | - | - | 0.14 | 0.79 |
| 17 | D6 | 13% | A9 | 87% | - | - | 0.13 | 0.77 |
| 18 | D9 | 17% | A9 | 83% | - | - | 0.17 | 0.94 |
| 19 | D10 | 16% | A9 | 84% | - | - | 0.15 | 0.84 |
| 20 | D11 | 14% | A9 | 86% | - | - | 0.09 | 0.49 |
| 21 | D3 | 10% | A2 | 85% | A1 | 5% | 0.22 | 1.15 |
| 22 | D5 | 12% | A2 | 83% | A1 | 5% | 0.23 | 1.18 |
| 23 | D6 | 12% | A2 | 83% | A1 | 5% | 0.21 | 1.08 |
| 24 | D9 | 15% | A2 | 80% | A1 | 5% | 0.21 | 1.02 |
| 25 | D10 | 14% | A2 | 81% | A1 | 5% | 0.30 | 1.51 |
| 26 | D11 | 12% | A2 | 83% | A1 | 5% | 0.20 | 1.01 |
| 27 | D5 | 10% | A2 | 80% | A4 | 10% | 0.20 | 1.08 |
| 28 | D6 | 12% | A2 | 78% | A4 | 10% | 0.19 | 0.99 |
| 29 | D9 | 15% | A2 | 75% | A4 | 10% | 0.20 | 1.00 |
| 30 | D10 | 14% | A2 | 76% | A4 | 10% | 0.22 | 1.11 |
| 31 | D11 | 12% | A2 | 78% | A4 | 10% | 0.22 | 1.15 |
| 32 | D3 | 10% | A9 | 11% | A4 | 79% | 0.25 | 1.66 |
| 33 | D3 | 10% | A2 | 45% | A5 | 45% | 0.06 | 0.31 |
| 34 | D3 | 10% | A2 | 72% | A5 | 18% | 0.14 | 0.74 |
| 35 | D5 | 12% | A2 | 75% | A5 | 13% | 0.16 | 0.83 |
| 36 | D6 | 12% | A2 | 76% | A5 | 12% | 0.16 | 0.81 |
| 37 | D6 | 12% | A2 | 44% | A5 | 44% | 0.04 | 0.20 |
| 38 | D9 | 15% | A2 | 73% | A5 | 12% | 0.17 | 0.85 |
| 39 | D10 | 14% | A2 | 43% | A5 | 43% | 0.05 | 0.22 |
| 40 | D11 | 11% | A2 | 59% | A5 | 30% | 0.12 | 0.63 |
| 41 | D11 | 12% | A2 | 70% | A5 | 18% | 0.16 | 0.80 |
| 42 | D12 | 10% | A2 | 78% | A5 | 12% | 0.11 | 0.56 |
| 43 | D3 | 10% | A2 | 80% | A9 | 10% | 0.10 | 0.51 |
| 44 | D5 | 12% | A2 | 78% | A9 | 10% | 0.18 | 0.92 |
| 45 | D6 | 12% | A2 | 78% | A9 | 10% | 0.18 | 0.96 |
| 46 | D9 | 15% | A2 | 75% | A9 | 10% | 0.23 | 1.15 |
| 47 | D10 | 14% | A2 | 76% | A9 | 10% | 0.17 | 0.84 |
| 48 | D11 | 12% | A2 | 78% | A9 | 10% | 0.13 | 0.66 |

**Table 2. Summary of the CO₂ loadings with Xₛₒₗᵥ(mol-amine/mol-solvent)=0.8 of all formulation evaluated under this work.**

| **Entry** | **Component A** | **A wt%** | **Component B** | **B wt%** | **Component C** | **C wt%** | **mol CO₂/ mol amine** | **mol CO₂/ kg solvent** |
|---|---|---|---|---|---|---|---|---|
| 1 | D3 | 19% | A2 | 71% | A5 | 10% | 0.16 | 0.72 |
| 2 | D5 | 18% | A2 | 73% | A5 | 9% | 0.24 | 1.14 |

**Table 3. Summary of the CO₂ loadings with Xₛₒₗᵥ(mol-amine/mol-solvent)=0.7 of all formulation evaluated under this work.**

| **Entry** | **Component A** | **A wt%** | **Component B** | **B wt%** | **Component C** | **C wt%** | **mol CO₂/ mol amine** | **mol CO₂/ kg solvent** |
|---|---|---|---|---|---|---|---|---|
| 1 | D9 | 40% | A2 | 60% | - | - | 0.12 | 0.42 |
| 2 | D9 | 47% | A4 | 53% | - | - | 0.25 | 1.02 |
| 3 | D9 | 41% | A2 | 53% | A1 | 7% | 0.08 | 0.29 |
| 4 | D19 | 32% | A2 | 60% | A1 | 8% | 0.14 | 0.55 |
| 5 | D9 | 44% | A2 | 49% | A5 | 7% | 0.07 | 0.23 |
| 6 | D18 | 47% | A2 | 47% | A5 | 6% | 0.07 | 0.20 |
| 7 | D19 | 32% | A2 | 61% | A5 | 7% | 0.13 | 0.52 |

**Table 4. Summary of the CO₂ loadings with Xₛₒₗᵥ(mol-amine/mol-solvent)=0.6 of all formulation evaluated under this work.**

| **Entry** | **Component A** | **A wt%** | **Component B** | **B wt%** | **Component C** | **C wt%** | **mol CO₂/ mol amine** | **mol CO₂/ kg solvent** |
|---|---|---|---|---|---|---|---|---|
| 1 | D9 | 48% | A2 | 46% | A1 | 6% | 0.08 | 0.25 |
| 2 | D10 | 49% | A2 | 45% | A1 | 6% | 0.10 | 0.30 |
| 3 | D15 | 38% | A2 | 55% | A5 | 7% | 0.07 | 0.27 |
| 4 | D17 | 37% | A2 | 56% | A5 | 7% | 0.13 | 0.49 |

**Table 5. Summary of all formulations that formed solid upon interaction with CO₂ evaluated under this work, all Xₛₒₗᵥ(mol-amine/mol-solvent)=0.9**

| **Entry** | **Component A** | **A wt%** | **Component B** | **B wt%** | **Component C** | **C wt%** | **mol CO₂/ mol amine** | **mol CO₂/ kg solvent** |
|---|---|---|---|---|---|---|---|---|
| 1 | D3 | 10% | A2 | 80% | A5 | 10% | 0.19 | 1.00 |
| 2 | D5 | 12% | A2 | 81% | A5 | 7% | 0.19 | 0.97 |
| 3 | D6 | 12% | A2 | 80% | A5 | 8% | 0.20 | 1.00 |
| 4 | D9 | 15% | A2 | 42% | A5 | 43% | 0.05 | 0.26 |
| 5 | D9 | 15% | A2 | 76% | A5 | 9% | 0.19 | 0.92 |
| 6 | D10 | 14% | A2 | 76% | A5 | 10% | 0.20 | 0.98 |
| 7 | D11 | 12% | A2 | 84% | A5 | 4% | 0.22 | 1.11 |
| 8 | D13 | 11% | A2 | 76% | A5 | 13% | 0.15 | 0.76 |

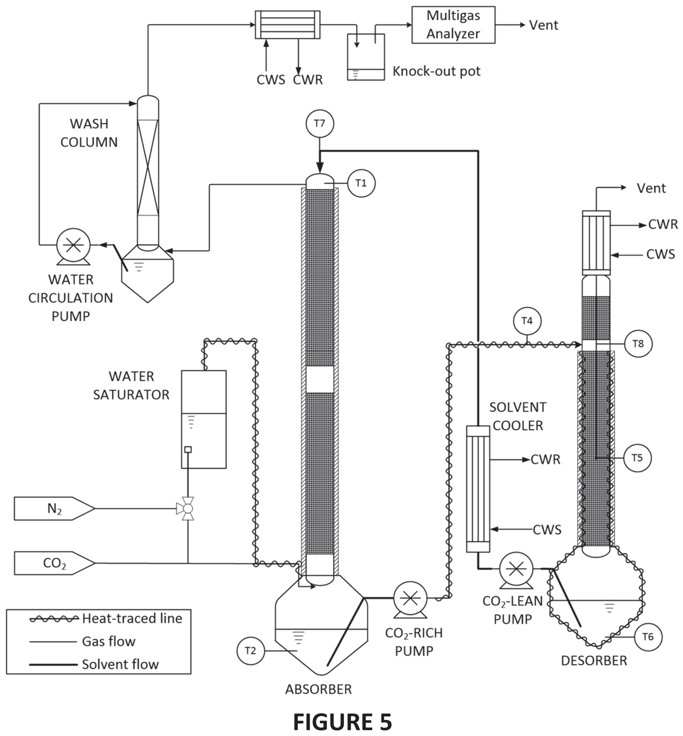

A lab-scale gas absorption system (LsGAS) (FIG. 5) was used to demonstrate the high CO₂ capture efficiency and vapor pressure of these solvent systems. The system is designed to continuously capture the CO₂ from the feed gas in the absorber and release the product CO₂ in the desorber while circulating solvent between the two columns. The system is automated and equipped with process controls to allow the tests to be run unattended for an extended period. The LsGAS consists of 4 main sections: (i) gas feed manifold, (ii) absorber column, (iii) desorber column, and (iv) absorber water wash column. The gas feed manifold section is equipped with mass flow controllers (Brooks Instrument, 5850i) to control the flow rate of N₂ and CO₂ to the absorber column. Water is introduced to the gas stream by flowing the N₂ through a water saturator at 40°C to produce a humid gas stream containing water at 7-5 vol%, mimicking the NGCC flue gas.

The absorber column consists of a standard borosilicate glass packed bed, 120 cm in height and 1.9 cm in diameter with a 250 mL borosilicate, tapered wall flask at the bottom that serves as the absorber sump. The absorber column is packed with approximately 210 g of 1.030 cm² 0.4 cm. x 0.4 cm. (W x H) Pro-Pak^{®} protruded metal packing to provide high surface area for gas-liquid contact and distribution. The CO₂-lean solvent is fed from the top of the column, about 2.5 cm above the packing and distributed through the randomly packed column as it travels downward. The CO₂-lean feed temperature is measured just before the solvent is discharged into the column (T7). The simulated flue gas is fed from the bottom and contacts the liquid over the packing where the CO₂ is absorbed in the liquid phase and produces a CO₂-depleted gas stream leaving the top of the absorber. The temperature of the absorber off-gas is monitored by T1 and is controlled between 40-41 °C by the CO₂-lean solvent entering at top of the absorber column. The CO₂-rich liquid continues to flow downward and is collected at the absorber sump. The temperature of the CO₂-rich solvent in the absorber sump is measured by T2. The CO₂-rich solvent is continuously extracted from the bottom of the sump via a ceramic piston pump and sent to the desorber. The solvent temperature is controlled using electrical heat tapes wrapped with a fiberglass insulation that covered from the outlet of both pumps to the inlets of the desorber column.

The absorber off-gas is sent to a water wash section to recover the amine and reduce the amine emission. Similar to the absorber, the wash column consists of a standard borosilicate glass packed-bed gas column, 120 cm in height and 1.9 cm in diameter, positioned on top of a 250 mL borosilicate, tapered wall flask. The wash column is insulated and packed with Pro-Pak^{®} protruded metal packing similar to the absorber. The absorber off-gas is then fed through the wash column at the bottom and leaves the column at the top. Water is circulated from the water wash sump through a peristaltic pump and discharged at the top of wash column. The water wash sump temperature is controlled using a heated water bath set at 45-46 °C to produce water wash column operating temperature at around 40 °C. The gas leaving water wash section is then sent to a knock-out pot with condenser to further remove the water from the gas stream. The condenser is cooled by a mixture of water and propylene glycol which produces a saturated gas leaving the condenser at 4-6 °C. The CO₂ content and amine in the water wash off-gas is then analyzed by a Multigas Analyzer (MKS 2030) before venting to atmosphere.

The test focused on the operating condition that emulates the NGCC capture condition, specifically when the cooling water provides to the capture system is available at 35 C. Though the cooling water temperature varies widely, the availability of 35 °C cooling water appears to be a practical choice and can be provided in many locations. This leads to the approximately 40-45 °C water-saturated flue gas out of the DCC entering the absorber. Similarly, the solvent lean return of 40-45 °C can be achieved with 35 C cooling water.

The desorber is constructed in a similar fashion as the absorber column with 90 cm in height and 1.9 cm in diameter filled with the same type of Pro-Pak packings. The desorber and sump are insulated, and temperature controlled (T5 and T6) by an electrical heat tape to provide heat for regeneration. The regenerated CO₂ leaves at the top of the desorber then further cooled by the overhead condenser using a chilled water/propylene glycol mixture to condense most of the water back into the desorber. The dried regenerated CO₂ is vented out from the system.

A solvent system consisting of amine A2 and diluent D9 were subjected to continuous CO₂ capture from a NGCC simulated flue gas containing 4 vol% CO₂, 8 vol% H₂O, 10 vol% O₂, and balanced N₂ with capture target at >97% for 580 hours. The regeneration energy input, emissions from absorber, water wash, L/G were evaluated. The process parameters at steady state were averaged over the last 2 hours and CO₂-rich and lean, water wash, and knockout pot samples were collected at the steady state. During this run, samples were collected typically every 24 hours from the absorber, regeneration, and water wash sump as well as the knock-out flask. The entire water wash and knock-out pot condensate were collected, weighted, analyzed for amine content. The amine emissions from absorber and water wash were then determined based on the amount of the amine collected in water wash sump and knock-out pot, respectively. About 100 ml of water wash condensate was returned to the water wash sump to preserve the amine content, and thus produce a corresponding amine vapor pressure, at steady state condition in the wash sump.

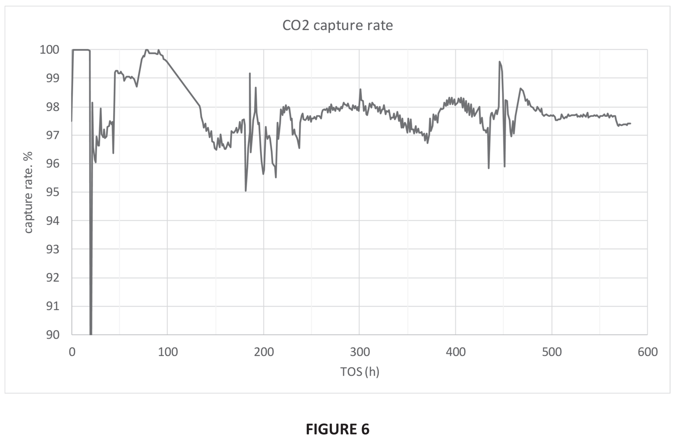

The CO₂ removal efficiency of the A2-D9 at LsGAS is shown in FIG. 6. The solvent was heated up and the operating conditions were being adjusted during the first 20 h. The system was slowly adjusted to achieve the capture rate target of 97% near the TOS 50 h. The operating conditions were further adjusted to demonstrate the 99%+ CO₂ removal of A2-D9 solvent between TOS 50-100 h. The straight interpolated line between TOS 100-145 h was due to the data logging issue from the MKS analyzer. The CO₂ capture rate during this time remained more than 97%. The capture rate was controlled to be around 97% from TOS 140 h onwards.

The amine emissions from the absorber and water wash were determined at different TOS and are provided below in Table 6 and Table 7.

**Table 6. Amine emissions in the absorber gas outlet at different TOS during the A2-D9 testing.**

| **TOS (h)** | **amine emissions out of absorber (ppm)** |
|---|---|
| 206.8 | 18.10 |
| 229.8 | 16.75 |
| 253.3 | 17.38 |
| 276.2 | 16.83 |

**Table 7. Amine emissions in the water wash gas outlet at different TOS during the A2-D9 testing.**

| **TOS (h)** | **amine emissions out of water wash at 40 C (ppm)** |
|---|---|
| 460.9 | 0.37 |
| 484.8 | 0.81 |
| 508.8 | 0.86 |
| 533.9 | 1.28 |
| 580.1 | 1.40 |

The solubility of amine in water was tested by mixing amines with specific masses (see Table 4) of water in a 20 mL scintillation vial and stirring at 200 rpm for 18 h at 25 °C. The suspension was allowed to sit for 15 min after stopping the stirring to enable separation of the aqueous layer from amine. The top aqueous layer was pipetted out for subsequent testing. For solid amines, the suspension was filtered through a plug of glass wool and the aqueous liquid layer was collected for subsequent testing. The aqueous layer was titrated using a Metrohm autotitrator with 0.1 N HCl. The amine wt% found in the aqueous layer is termed as water solubility and they are listed in Table 8 below.

**Table 8. Water solubility of various amines at 25 °C.**

| **Amine** | **A1** | **A2** | **A4** | **A5** | **A6** | **A9** | **A10** | **A11** | **AM1** | **AM6** | **AM9** |
|---|---|---|---|---|---|---|---|---|---|---|---|
| **Amine: Water (mass)** | 1:1 | 1:1 | 1:1 | 1:1 | 1:1 | 1:1 | 1:1 | 1:1 | 1:1 | 1:20 | 1:4 |
| **Water Solubility (%)** | 0.47 | 0.44 | 2.54 | 0.75 | Not detected | -* | 0.96 | 0.17 | 0.19 | 1.95 | 15.33 |

| | | | | | | | | | | | |
|---|---|---|---|---|---|---|---|---|---|---|---|
| *completely water soluble | | | | | | | | | | | |

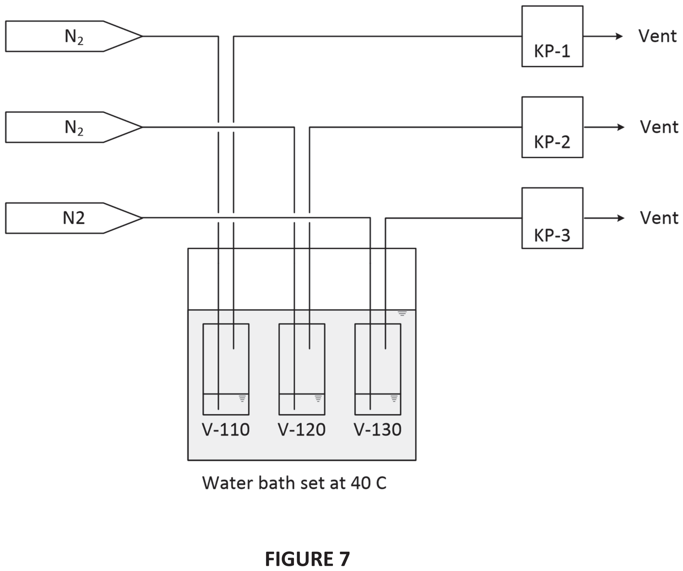

The emission testing system (ETS) is constructed to evaluate the vapor pressure of these solvent systems. The ETS, shown in FIG. 7, consists of 3 testing stations which can be used to evaluate 3 different samples simultaneously. Each station consists of a N₂ mass flow controller, a bubbler, and a knock-out pot. The N₂ is used to bubble through the sample where the sample vapor is produced and leaves with the N₂. The saturator effluent is sent to the knock-pot (KPₓ) to remove any condensed liquid before sending the gas out to the bent. The saturators are submerged in the temperature-controlled water bath. The saturator is filled with about 10 g of the solvent sample, submerged in the water bath, and subjected to 150 sccm N₂ flow for a period of time. The saturator is weighted before and after the test. The apparent vapor pressure is determined by the solvent mass loss under a constant bath temperature and gas flow rate over a known period of time.

The vapor pressure of various amines considered in this work are shown in Table 9.

**Table 9. Apparent vapor pressure of various amines at 40°C at 1 atm pressure.**

| **Amine** | **AM20** | **A1** | **A2** | **A4** | **A5** |
|---|---|---|---|---|---|
| **Vapor Pressure, Pa** | 194.42 (±9.66) | 1.06 (±0.24) | 0.94 (±0.08) | 9.62 (±0.21) | 0.36 (±0.20) |

### ASPECTS OF THE INVENTION

1. A solvent system comprising a solution formed of:
   a nitrogenous base component, comprising a nitrogenous base having a hydrogen atom leaving group and a vapor pressure of less than 0.1 kPa at 25°C and 101 kPa; and
   a diluent component,
      wherein the nitrogenous base has a structure such that it reacts with an acidic gas so as to form a carbamate salt or a heteroatom analogue of a carbamate salt without any substantial formation of a carbonate ester or a heteroatom analogue of a carbonate ester, and
      wherein no substantial amount of precipitate is formed upon combination of CO₂ with the solvent system.
2. The solvent system of aspect 1, wherein the solvent system has a solubility with water of less than about 10 g of solvent per 100 mL of water.
3. The solvent system of aspect 1 or 2, wherein the nitrogenous base is selected from the group consisting of *N*-methyl-1-(naphthalen-1-yl)methanamine, *N*-methyl-1-(naphthalen-1-yl)methanamine, 2-(naphthalen-1-yl)ethan-1-amine, *N*1-(naphthalen-1-yl)ethane-1,2-diamine, 1-(naphthalen-1-yl)methanamine, (1,2,3,4-tetrahydroisoquinolin-3-yl)methanol, *N*-benzyl-1-phenylmethanamine, 1,1-diphenylmethanamine, 1,2,3,4 tetrahydroquinoxaline, 4-[(methylamino)methyl]phenol, 2-amino-2-phenylethan-1-ol, 2-amino-2-phenylethan-1-ol, *N*-ethyl-1-phenylpropan-2-amine, 2-(piperidin-1-yl)ethan-1-amine, and combinations thereof.
4. The solvent system of any of aspects 1-3, wherein the diluent component comprises a polyalkylene ether.
5. The solvent system of aspect 4, wherein the polyalkylene ether is a monoether, diether, or polyalkylene glycol.
6. The solvent system of any of aspects 1 to 5, wherein the diluent component is selected from the group consisting of 1-[2-(2-butoxyethoxy)ethoxy]butane, 5,8,11,14-tetraoxaoctadecane, tetraethyleneglycol-di-butyl ether, 1-[2-(2-methoxyethoxy)ethoxy]butane, 2,5,8,11-tetraoxapentadecane, 2,5,8,11-tetraoxapentadecane, 2-(2-butoxyethoxy)ethan-1-ol, 2-[2-(2-butoxyethoxy)ethoxy]ethan-1-ol, 3,6,9,12-tetraoxahexadecan-1-ol, 1-methoxy-2-(2-methoxyethoxy)ethane, 2,5,8,11-tetraoxadodecane, 2,5,8,11,14-pentaoxapentadecane, 2-(2-methoxyethoxy)ethan-1-ol, 2-[2-(2-methoxyethoxy)ethoxy]ethan-1-ol, 2,5,8,11-tetraoxatridecan-13-ol, 2,2'-oxydi(ethan-1-ol), 2,2'-[ethane-1,2-diylbis(oxy)]di(ethan-1-ol), 2,2'-[oxybis(ethane-2,1-diyloxy)]di(ethan-1-ol), 1-{[1-(2-butoxypropoxy)propan-2-yl]oxy}butane, 1-{[1-(2-methoxypropoxy)propan-2-yl]oxy}butane, 1-(2-butoxypropoxy)propan-2-ol, and combinations thereof.
7. The solvent system of any of aspects 1-6, comprising a single diluent and a single nitrogenous base.
8. The solvent system of any of aspects 1-6, comprising a single diluent and two different nitrogenous bases.
9. The solvent system of any of aspects 1-8, consisting essentially of one or more diluents and one or more nitrogenous bases, alone or in combination with one or more gas stream components (e.g., acid gases) and/or reaction products.
10. The solvent system of aspect 9, wherein the reaction products comprise a carbamate salts or a heteroatom analogue of a carbamate salt.
11. The solvent system of any of aspects 1-10, comprising at least about 50% by weight of the nitrogenous base component.
12. The solvent system of aspect 11, comprising at least about 70% by weight of the nitrogenous base component.
13. A solvent system comprising a solution formed of:
   a nitrogenous base component A selected from 1-(naphthalen-1-yl)ethan-1-amine (A1), *N*-methyl-1-(naphthalen-1-yl)methanamine (A2), 1,2,3,4-tetrahydroisoquinoline (A4), and 2-(benzylamino)ethan-1-ol (A9); and
   a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), and 5,8,11,14-tetraoxaoctadecane (D20).
14. The solvent system of aspect 13, consisting essentially of A and D, alone or in combination with one or more gas stream components (e.g., acid gases) and/or reaction products.
15. A solvent system comprising a solution formed of:
   two different nitrogenous base components A_{A} and A_{B},
   wherein A_{A} is selected from N-methyl-1-(naphthalen-1-yl)methanamine (A2) and 2-(benzylamino)ethan-1-ol (A9) and
   wherein A_{B} is selected from 1-(naphthalen-1-yl)ethan-1-amine (A1), *N-*methyl-1-(naphthalen-1-yl)methanamine (A2), 1,2,3,4-tetrahydroisoquinoline (A4), A5, and 2-(benzylamino)ethan-1-ol (A9); and
   a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), 1-[(1-propoxypropan-2-yl)oxy]propan-2-ol (D12), 1-[(1-butoxypropan-2-yl)oxy]propan-2-ol (D13), 2-butoxyethyl acetate (D15), 2-[(2-ethylhexyl)oxy]ethan-1-ol (D17), polyethylene glycol phenyl ether (D18), and 2-[2-(hexyloxy)ethoxy]ethan-1-ol (D19),
   wherein a combination of A2, A5, and D3 contains less than 78% by weight of A2 and/or greater than 12% A5 by weight;
   wherein a combination of A2, A5, and D5 contains less than 80% A2 by weight and/or greater than 8% A5 by weight;
   wherein a combination of A2, A5, and D6 contains less than 78% A2 by weight and/or greater than 10% A5 by weight;
   wherein a combination of A2, A5, and D9 contains a higher content of A2 than A5 by weight and contains less than 75% A2 by weight and/or greater than 10% A5 by weight;
   wherein a combination of A2, A5, and D10 contains less than 70% A2 by weight and/or greater than 15% A5 by weight;
   wherein a combination of A2, A5, and D11 contains less than 80% A2 by weight and/or greater than 10% A5 by weight; and
   wherein a combination of A2, A5, and D13 contains less than 70% A2 by weight and/or more than 15% A5 by weight.
16. A process for the removal of acid gas from a gas stream, comprising contacting an acid gas-containing gas stream with the solvent system of any of aspects 1-15.
17. The process of aspect 16, further comprising outputting an acid gas-rich solvent and an acid gas-lean gas stream.
18. The process of aspect 16 or 17, further comprising regenerating the acid gas-rich solvent by applying heat to form a regenerated solvent comprising a lower content of acid gas than present in the acid gas-rich solvent.
19. The process of any of aspects 16-18, wherein the heat applied by the regeneration component is derived from a source selected from the group consisting of low-pressure steam, hot flue gas, or a combination thereof.

## Claims

1. A solvent system comprising a solution formed of:
a nitrogenous base component, comprising a nitrogenous base having a hydrogen atom leaving group and a vapor pressure of less than 0.1 kPa at 25°C and 101 kPa; and
a diluent component,
wherein the nitrogenous base has a structure such that it reacts with an acidic gas so as to form a carbamate salt or a heteroatom analogue of a carbamate salt without any substantial formation of a carbonate ester or a heteroatom analogue of a carbonate ester, and
wherein no substantial amount of precipitate is formed upon combination of CO₂ with the solvent system.

2. The solvent system of claim 1, wherein the solvent system has a solubility with water of less than about 10 g of solvent per 100 mL of water.

3. The solvent system of claim 1 or 2, wherein the nitrogenous base is selected from the group consisting of *N*-methyl-1-(naphthalen-1-yl)methanamine, *N*-methyl-1-(naphthalen-1-yl)methanamine, 2-(naphthalen-1-yl)ethan-1-amine, *N*1-(naphthalen-1-yl)ethane-1,2-diamine, 1-(naphthalen-1-yl)methanamine, (1,2,3,4-tetrahydroisoquinolin-3-yl)methanol, *N*-benzyl-1-phenylmethanamine, 1,1-diphenylmethanamine, 1,2,3,4 tetrahydroquinoxaline, 4-[(methylamino)methyl]phenol, 2-amino-2-phenylethan-1-ol, 2-amino-2-phenylethan-1-ol, *N*-ethyl-1-phenylpropan-2-amine, 2-(piperidin-1-yl)ethan-1-amine, and combinations thereof.

4. The solvent system of any of claims 1-3, wherein the diluent component comprises a polyalkylene ether, optionally
wherein the polyalkylene ether is a monoether, diether, or polyalkylene glycol.

5. The solvent system of any of claims 1 to 4, wherein the diluent component is selected from the group consisting of 1-[2-(2-butoxyethoxy)ethoxy]butane, 5,8,11,14-tetraoxaoctadecane, tetraethyleneglycol-di-butyl ether, 1-[2-(2-methoxyethoxy)ethoxy]butane, 2,5,8,11-tetraoxapentadecane, 2,5,8,11-tetraoxapentadecane, 2-(2-butoxyethoxy)ethan-1-ol, 2-[2-(2-butoxyethoxy)ethoxy]ethan-1-ol, 3,6,9,12-tetraoxahexadecan-1-ol, 1-methoxy-2-(2-methoxyethoxy)ethane, 2,5,8,11-tetraoxadodecane, 2,5,8,11,14-pentaoxapentadecane, 2-(2-methoxyethoxy)ethan-1-ol, 2-[2-(2-methoxyethoxy)ethoxy]ethan-1-ol, 2,5,8,11-tetraoxatridecan-13-ol, 2,2'-oxydi(ethan-1-ol), 2,2'-[ethane-1,2-diylbis(oxy)]di(ethan-1-ol), 2,2'-[oxybis(ethane-2,1-diyloxy)]di(ethan-1-ol), 1-{[1-(2-butoxypropoxy)propan-2-yl]oxy}butane, 1-{[1-(2-methoxypropoxy)propan-2-yl]oxy}butane, 1-(2-butoxypropoxy)propan-2-ol, and combinations thereof.

6. The solvent system of any of claims 1-5, comprising a single diluent and:
i) a single nitrogenous base; or
ii) two different nitrogenous bases.

7. The solvent system of any of claims 1-6, consisting essentially of one or more diluents and one or more nitrogenous bases, alone or in combination with one or more gas stream components (e.g., acid gases) and/or reaction products, optionally
wherein the reaction products comprise a carbamate salts or a heteroatom analogue of a carbamate salt.

8. The solvent system of any of claims 1-7, comprising at least about 50% by weight of the nitrogenous base component, optionally
comprising at least about 70% by weight of the nitrogenous base component.

9. A solvent system comprising a solution formed of:
a nitrogenous base component A selected from 1-(naphthalen-1-yl)ethan-1-amine (A1), N-methyl-1-(naphthalen-1-yl)methanamine (A2), 1,2,3,4-tetrahydroisoquinoline (A4), and 2-(benzylamino)ethan-1-ol (A9); and
a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), and 5,8,11,14-tetraoxaoctadecane (D20).

10. The solvent system of claim 9, consisting essentially of A and D, alone or in combination with one or more gas stream components (e.g., acid gases) and/or reaction products.

11. A solvent system comprising a solution formed of:
two different nitrogenous base components A_{A} and A_{B},
wherein A_{A} is selected from *N*-methyl-1-(naphthalen-1-yl)methanamine (A2) and 2-(benzylamino)ethan-1-ol (A9) and
wherein A_{B} is selected from 1-(naphthalen-1-yl)ethan-1-amine (A1), *N-*methyl-1-(naphthalen-1-yl)methanamine (A2), 1,2,3,4-tetrahydroisoquinoline (A4), A5, and 2-(benzylamino)ethan-1-ol (A9); and
a diluent component D selected from 2-[2-(2-methoxyethoxy)ethoxy]ethan-1-ol (D3), 2-[2-(2-butoxyethoxy)ethoxy]ethan-1-ol (D5), 1-({1-[(1-methoxypropan-2-yl)oxy]propan-2-yl}oxy)propan-2-ol (D6), a mixture of ethers (D9), 3-[3-(3-butyoxypropoxy)propoxy]propan-1-ol (D10), tripropylene glycol methyl ether (D11), 1-[(1-propoxypropan-2-yl)oxy]propan-2-ol (D12), 1-[(1-butoxypropan-2-yl)oxy]propan-2-ol (D13), 2-butoxyethyl acetate (D15), 2-[(2-ethylhexyl)oxy]ethan-1-ol (D17), polyethylene glycol phenyl ether (D18), and 2-[2-(hexyloxy)ethoxy]ethan-1-ol (D19),
wherein a combination of A2, A5, and D3 contains less than 78% by weight of A2 and/or greater than 12% A5 by weight;
wherein a combination of A2, A5, and D5 contains less than 80% A2 by weight and/or greater than 8% A5 by weight;
wherein a combination of A2, A5, and D6 contains less than 78% A2 by weight and/or greater than 10% A5 by weight;
wherein a combination of A2, A5, and D9 contains a higher content of A2 than A5 by weight and contains less than 75% A2 by weight and/or greater than 10% A5 by weight;
wherein a combination of A2, A5, and D10 contains less than 70% A2 by weight and/or greater than 15% A5 by weight;
wherein a combination of A2, A5, and D11 contains less than 80% A2 by weight and/or greater than 10% A5 by weight; and
wherein a combination of A2, A5, and D13 contains less than 70% A2 by weight and/or more than 15% A5 by weight.

12. A process for the removal of acid gas from a gas stream, comprising contacting an acid gas-containing gas stream with the solvent system of any of claims 1-11.

13. The process of claim 12, further comprising outputting an acid gas-rich solvent and an acid gas-lean gas stream.

14. The process of claim 12 or 13, further comprising regenerating the acid gas-rich solvent by applying heat to form a regenerated solvent comprising a lower content of acid gas than present in the acid gas-rich solvent.

15. The process of any of claims 12-14, wherein the heat applied by the regeneration component is derived from a source selected from the group consisting of low-pressure steam, hot flue gas, or a combination thereof.
